Europäisches Patentamt

European Patent Office

Office européen des brevets

(11) Numéro de publication: **0 082 754**

**A1**

## (12) DEMANDE DE BREVET EUROPEEN

(21) Numéro de dépôt: **82402257.8**

(22) Date de dépôt: **09.12.82**

(51) Int. Cl.³: **C 04 B 35/22**
**C 01 B 33/24**

(30) Priorité: **23.12.81 FR 8124128**

(43) Date de publication de la demande:
**29.06.83 Bulletin 83/26**

(84) Etats contractants désignés:
**AT BE CH DE GB IT LI LU NL SE**

(71) Demandeur: **SOCIETE FRANCAISE DE CERAMIQUE**
**Société dite:**
**23 Rue de Cronstadt**
**F-75015 Paris(FR)**

(72) Inventeur: **Baudran, André**
**21 Rue Jean-Jaurès**
**F-91370 Verrieres le Buisson(FR)**

(74) Mandataire: **Moncheny, Michel et al,**
**c/o Cabinet Lavoix 2 Place d'Estienne d'Orves**
**F-75441 Paris Cedex 09(FR)**

(54) **Procédé de fabrication d'un matériau à base de pseudo-wollastonite.**

(57) L'invention a pour objet un procédé de fabrication d'un matériau contenant principalement de la pseudowollastonite, du type consistant à broyer une craie naturelle contenant de la silice ayant un rapport de $CaCO_3/SiO_2$ voisin de la stoechiométrie et à soumettre cette craie broyée à une cuisson à une température supérieure à 1100°C, ce procédé permettant d'obtenir un matériau ayant des propriétés améliorées en suspension aqueuse et étant caractérisé en ce que l'on mélange la craie broyée avec de l'argile qui est ajoutée à raison de 12 à 40 % en poids par rapport au poids du mélange et on soumet le mélange à une cuisson à une température de 1215 à 1290°C.

EP 0 082 754 A1

1.

Procédé de fabrication d'un matériau à base de
pseudo-wollastonite.-

La présente invention concerne un procédé de fabrication d'un matériau contenant de la pseudowollastonite.

La wollastonite ou la pseudowollastonite présentent
un grand intérêt en céramique. Leur incorporation dans des
barbotines utilisées pour la fabrication de matériaux
céramiques permet en effet d'obtenir, lors de la cuisson,
des variations dimensionnelles plus régulières, sinon
moindres et, par suite, de réduire notablement les durées
de cuisson.

Des procédés de synthèse de wollastonite ou de
pseudowollastonite ont été développés.

Les procédés de fabrication de wollastonite de
synthèse consistent, d'une manière générale, à mélanger
de la silice et un composé contenant du calcium dans un
rapport $CaO/SiO_2$ sensiblement stoechiométrique et à faire
fondre le mélange.

Dans le brevet français FR-A-2 234 244 on a proposé
un procédé de fabrication de wollastonite de synthèse
consistant à partir d'une craie contenant de la silice
ayant soit un rapport $CaCO_3/SiO_2$ voisin de la stoechiométrie , soit des proportions différentes, mais avec addition
de carbonate de calcium ou de silice pour se rapprocher
de la stoechiométrie, à broyer le produit pour obtenir une
granulométrie inférieure à 2 mm et à soumettre le produit
broyé à une cuisson à une température de 1000 à 1100°C
pour obtenir de la wollastonite ou à une température supérieure à 1100°C (de 1100 à 1500°C) pour obtenir de la
pseudowollastonite.

Ce procédé permet d'obtenir de la wollastonite ou
de la pseudowollastonite par des réactions de diffusion
à l'état solide.

Le brevet prévoit notamment d'utiliser comme craie
de la craie tuffeau.

2.

Un défaut inhérent à la totalité des wollastonites de synthèse est le fait que lorsqu'on les incorpore dans une barbotine elles entraînent des phénomènes de thixotropie qui gênent fortement la mise en oeuvre des barbotines. En particulier, il est alors difficile de faire couler ces barbotines.

La présente invention vise à remédier à cet inconvénient et donc à fournir une wollastonite de synthèse qui présente notamment des propriétés améliorées en suspension dans l'eau.

A cet effet, la présente invention a pour objet un procédé de fabrication d'un matériau contenant principalement de la pseudowollastonite, du type consistant à broyer une craie naturelle contenant de la silice ayant un rapport $CaCO_3/SiO_2$ voisin de la stoechiométrie et à soumettre cette craie broyée à une cuisson à une température supérieure à 1100°C, ce procédé permettant d'obtenir un matériau ayant des propriétés améliorées en suspension aqueuse et étant caractérisé en ce que l'on mélange la craie broyée avec de l'argile qui est ajoutée à raison de 12 à 40 % en poids par rapport au poids du mélange et l'on soumet le mélange à une cuisson à une température de 1215 à 1290°C.

Il est à noter que le brevet français FR- A.-2 239 429 décrit un procédé de fabrication de wollastonite de synthèse dans lequel on ajoute de l'argile. Toutefois, d'une part, ce procédé utilise la technique classique de la fusion d'un mélange de silice et d'un composé contenant du calcium et, d'autre part, l'argile n'est ajoutée qu'en faible proportion (de 1 à 5 % en poids) comme promoteur pour abaisser le point de fusion des mélanges. Ce document ne suggère nullement d'améliorer les propriétés des wollastonites de synthèse en suspension dans l'eau.

Par ailleurs, l'addition d'argile selon la présente invention non seulement permet d'obtenir un matériau ayant des propriétés améliorées en suspension aqueuse et donc utilisable pour la fabrication de matériaux céramiques mais, en outre, facilite très nettement la mise en oeuvre du procédé, en permettant ainsi une fabrication au stade industriel.

C'est ainsi notamment que l'addition d'argile accroît la cohésion en cru du matériau, facilitant ainsi le traitement sous forme de boulets en vue de la cuisson dans un four rotatif et permettant le façonnage par étirage ou pressage de ces boulets.

Le taux d'argile utilisé dans le procédé selon la présente invention est de préférence de 20 à 30 % en poids.

Comme argile, on peut utiliser des argiles courantes et notamment celles utilisées en céramique fine, du type kaolinitique ou kaolinoillitique.

On choisira de préférence celles ayant une faible teneur en oxydes de fer et de titane.

On utilisera avantageusement des argiles ayant une granulométrie inférieure à 63 μ et de préférence inférieure à 20 μ.

Comme craie naturelle contenant de la silice, on peut utiliser un tuffeau ayant un rapport $CaCO_3/SiO_2$ voisin de la stoechiométrie.

On utilisera avantageusement une craie naturelle contenant de la silice, broyée à une granulométrie inférieure à 125 μ et de préférence inférieure à 80 μ.

Les températures de cuisson sont avantageusement de 1220 à 1250°C.

Les durées de cuisson sont généralement de trois à six heures.

Les produits obtenus sont ensuite généralement broyés pour être amenés à la granulométrie désirée, par exemple à une taille moyenne de particules de 20 μm.

On donnera ci-après des compte-rendus d'essais mettant en évidence les caractéristiques de la présente invention.

Première série d'essais (Essais 1 et 2)

On prépare des mélanges intimes comprenant 85 % en poids d'un tuffeau broyé à 100 μm et 15 % en poids soit d'argile kaolitique (essai 1), soit d'argile kaolinoillitique (essai 2) sous forme de particules d'une répartition granulométrique ne comprenant pas de grains d'un
diamètre supérieur à 20 µm.

La composition du tuffeau et des argiles est donnée dans le tableau I.

TABLEAU I

|  | Tuffeau cru | Argile kaolinitique | Argile kaolinoillitique |
|---|---|---|---|
| $SiO_2$ | 35,5 | 50,6 | 62 |
| $Al_2O_3$ | 2,5 | 33,7 | 25,5 |
| $TiO_2$ | 0,2 | 1,4 | 1,5 |
| $Fe_2O_3$ | 0,8 | 1,5 | 1,1 |
| CaO | 32,0 | 0,3 | 0,1 |
| MgO | 1,0 | 0,1 | 0,4 |
| $K_2O$ | 0,5 | 0,7 | 2,2 |
| $Na_2O$ | 0,2 | 0,1 | 0,1 |
| Perte au feu | 27,3 | 11,6 | 7,1 |

On ajoute 28 % d'eau à ce mélange et l'on malaxe
pour obtenir une pâte. On extrude cette pâte en cylindre
de 30 mm de diamètre et 30 mm de longueur. On cuit les
cylindres au four à une température de 1250°C, suivant le
cycle.

Echauffement      2 h.00

Palier à 1250°C        0 h.30

Refroidissement        2 h.30

Les deux produits obtenus sont constitués principalement de pseudowollastonite.

Lorsqu'on les incorpore, après broyage jusqu'à l'obtention d'une répartition granulométrique ne comprenant pas de grains d'un diamètre supérieur à 100 μm, à raison de 15 % en poids dans une barbotine classique de vitreous sanitaire à la place du feldspath, on n'observe aucun phénomène de thixotropie.

Deuxième série d'essais

On prépare des mélanges intimes de tuffeau et d'argile kaolinitique utilisés dans la première série d'essais, en différentes proportions.

On presse les mélanges sous forme de cylindres sous une pression de $2,5 \ 10^7$ Pa.

On cuit au four à 1210°C ou 1250°C suivant le cycle.

Echauffement        1 h.30

Palier              0 h.30

Refroidissement      1 h.30

Les résultats sont rassemblés dans le tableau II.

TABLEAU II

| Essai | % Argile | Température de cuisson | Quantité de pseudo-wollas-tonite formée | Quantité de wollas-tonite formée | Quantité de larnite formée | Comportement rhéologique d'une barbotine contenant 15 % d'un tel produit |
|---|---|---|---|---|---|---|
| 3 | 10 | 1210 | importante | faible | moyenne | mauvais |
| 4 | 10 | 1250 | " | nulle | faible | " |
| 5 | 15 | 1210 | " | faible | " | " |
| 6 | 15 | 1250 | " | nulle | très faible | moyen |
| 7 | 20 | 1210 | moyenne | moyenne | faible | mauvais |
| 8 | 20 | 1250 | importante | nulle | très faible | bon |

7.

Ces essais mettent en évidence qu'à la température de cuisson de 1250°C seuls les produits contenant 20 % d'argile ont un comportement rhéologique satisfaisant, les produits contenant 15 % d'argile ont un comportement rhéologique qui est déjà modifié dans un sens défavorable, tandis que les produits contenant 10 % d'argile ont un comportement rhéologique qui est mauvais.

Par ailleurs, à une température de cuisson de 1210°C, aucun des produits n'a un comportement rhéologique acceptable.

Troisième série d'essais

On a préparé des mélanges contenant 70 % en poids de tuffeau broyé à 100 μm et 30 % en poids d'argile constituée de grains d'un diamètre inférieur à 20 μm.

La composition du tuffeau et de l'argile est donnée dans le tableau suivant.

TABLEAU III

|  | Tuffeau | Argile |
|---|---|---|
| $SiO_2$ | 34,3 | 50,60 |
| $Al_2O_3$ | 3 | 33,7 |
| $TiO_2 + Fe_2O_3$ | 0,8 | 2,9 |
| CaO | 33,1 | 0,3 |
| MgO | 0,2 | 0,1 |
| $K_2O + Na_2O$ | 0,5 | 0,8 |
| Perte au feu | 27,9 | 11,6 |

Après mélange à sec, on humidifie à 28 % en poids et on malaxe l'ensemble pour obtenir une pâte que l'on extrude sous forme de briquettes et que l'on sèche.

Ces briquettes sont cuites à une température de 1220 à 1240°C suivant le cycle.

| | |
|---|---|
| Echauffement | 3 h. |
| Palier | 0 h.40 mn |
| Refroidissement | 1 h.30 mn |

L'examen minéralogique confirme le développement de pseudowollastonite, associée à des minéraux annexes en faible quantité (gehlénite, anorthite, quartz).

On a contrôlé l'influence du produit sur les suspensions céramiques (barbotines) dans lesquelles il est destiné à être introduit. Des essais de défloculation ont montré, à cet égard, que 15 % du produit fabriqué broyé jusqu'à l'obtention d'une répartition granulométrique ne comprenant pas de grains d'un diamètre supérieur à 100 µm ne pouvaient être substitués à la même quantité de feldspath dans une barbotine de vitreous sanitaire sans que cette substitution n'entraîne les phénomènes parasites de fige (thixotropie) rencontrés habituellement avec les wollastonites.

Sans vouloir limiter l'invention par des explications théoriques, il est permis de penser que, dans une craie naturelle contenant de la silice, les constituants ne sont pas dans leur totalité réactifs. Cette réactivité dépend de divers facteurs (granulométrie, rapport $CaCO_3/SiO_2$, conditions du traitement thermique, etc.). Aussi, en l'absence d'addition d'argile et même avec un rapport $CaCO_3/SiO_2$ voisin de la stoechiométrie, il se forme non seulement de la wollastonite et de la pseudo-wollastonite, mais également des composés tels que la larnite, qui perturbent gravement le comportement des suspensions en milieu aqueux de la wollastonite ou de la pseudo-wollastonite. L'addition d'argile dans certaines proportions permet d'éviter la formation de larnite et favorise le développement d'anorthite. Cette présence d'anorthite dans le matériau à base de pseudo-wollastonite est favorable, puisque son introduction dans les compositions de céramique fine permet de développer la phase anorthitique.

## REVENDICATIONS

1. Procédé de fabrication d'un matériau contenant principalement de la pseudowollastonite, du type consistant à broyer une craie naturelle contenant de la silice ayant un rapport de $CaCO_3/SiO_2$ voisin de la stoechiométrie et à soumettre cette craie broyée à une cuisson à une température supérieure à 1100°C, ce procédé permettant d'obtenir un matériau ayant des propriétés améliorées en suspension aqueuse et étant caractérisé en ce que l'on mélange la craie broyée avec de l'argile qui est ajoutée à raison de 12 à 40 % en poids par rapport au poids du mélange et on soumet le mélange à une cuisson à une température de 1215 à 1290°C.

2. Procédé selon la revendication 1, caractérisé en ce que l'argile représente de 20 à 30 % du poids du mélange.

3. Procédé selon la revendication 1 ou 2, caractérisé en ce qu'on effectue la cuisson à une température de 1220 à 1250°C.

4. Matériau contenant principalement de la pseudowollastonite, obtenu par un procédé selon l'une quelconque des revendications 1 à 3.

**Office européen des brevets**

## RAPPORT DE RECHERCHE EUROPEENNE

EP 82 40 2257

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X,Y | US-A-3 381 064 (T.YAMAGUCHI et al.)<br>*Colonne 2, lignes 10-24; colonne 4, lignes 63-68; colonne 12, exemple 1* | 1,3,4 | C 04 B 35/22<br>C 01 B 33/24 |
| | --- | | |
| D,Y | FR-A-2 234 244 (BUR. DE RECHERCHES GEOL. ET MINIERE)<br>*Revendications 1,5* | 1,3,4 | |
| | ----- | | |

| DOMAINES TECHNIQUES RECHERCHES (Int. Cl. 3) |
|---|
| C 01 B 33/00<br>C 04 B 35/00 |

Le présent rapport de recherche a été établi pour toutes les revendications

| Lieu de la recherche | Date d'achèvement de la recherche | Examinateur |
|---|---|---|
| LA HAYE | 03-03-1983 | DAELEMAN P.C.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82